# EUROPÄISCHE PATENTSCHRIFT

(11) **EP 2 558 313 B1**
(45) Veröffentlichungstag und Bekanntmachung des Hinweises auf die Patenterteilung: **31.12.2014**
(21) Anmeldenummer: 11712840.5
(22) Anmeldetag: 04.04.2011
(51) Int. Cl.: B60J 5/04

(54) **KRAFTFAHRZEUG MIT BETÄTIGUNGSEINRICHTUNG ZUM ÖFFNEN DER SEITENTÜR**
MOTOR VEHICLE COMPRISING AN ACTUATOR FOR OPENING THE SIDE DOOR
VÉHICULE AUTOMOBILE

(30) Priorität: 08.04.2010 DE 102010003755
(43) Veröffentlichungstag der Anmeldung: 20.02.2013
(73) Patentinhaber: Bayerische Motoren Werke Aktiengesellschaft, 80809 München (DE)
(72) Erfinder: FREYMANN, Raymond, 80935 Muenchen (DE)
(86) Internationale Anmeldenummer: PCT/EP2011/055205
(87) Internationale Veröffentlichungsnummer: WO 2011/124550

(56) Entgegenhaltungen:
- EP-A1- 1 215 064
- JP-A- 2003 267 052
- US-A1- 2005 156 451

## Beschreibung

Die Erfindung betrifft ein Kraftfahrzeug nach dem Oberbegriff des Patentanspruchs 1.

Aus der DE 600 09 986 T2 ist ein Kraftfahrzeug bekannt, bei dem eine vordere und eine hintere Seitentür eine seitliche Türausschnittsöffnung in einer Karosserie des Kraftfahrzeugs verschließen können. Während die vordere Seitentür konventionell mit ihrem - in Fahrtrichtung gesehen - vorderen Abschnitt im vorderen Bereich der Türausschnittsöffnung an der Karosserie angelenkt ist, ist die hintere Tür mit ihrem hinteren Abschnitt im hinteren Bereich der Türausschnittsöffnung an die Karosserie angelenkt. Die vordere und die hintere Seitentür öffnen also zueinander in entgegengesetzter Richtung.

Ferner ist es bei zweitürigen Kraftfahrzeugen bekannt, dass die vorderen Fahrzeugsitze nach vorne verschoben und die Rückenlehne nach vorne verschwenkt werden können, um ein komfortableres Einsteigen zu den hinteren Fahrzeugsitzen zu ermöglichen. Diese Funktionalität wird allgemein mit dem Begriff "easy entry" beschrieben.

Aufgabe der Erfindung ist es, ein Kraftfahrzeug zu schaffen, das ein bequemes Ein- und Austeigen aller Fahrzeuginsassen ermöglicht.

Diese Aufgabe wird mit einem Kraftfahrzeug mit den Merkmalen des Patentanspruchs 1 gelöst.

Erfindungsgemäß weist ein Kraftfahrzeug einen seitlichen Türausschnitt auf, der gemäß einer ersten Variante ausschließlich mit einer vorderen Seitentür verschließbar ist. Gemäß einer zweiten Variante ist der seitliche Türausschnitt mit einer vorderen und einer hinteren Seitentür verschließbar, wobei die vordere Seitentür mit ihrem vorderen Abschnitt im vorderen Bereich und die hintere Seitentür mit ihrem hinteren Abschnitt im hinteren Bereich des Türausschnitts angelenkt ist, und wobei die geschlossene vordere Seitentür die geschlossene hintere Seitentür von der Fahrzeugaußenseite aus gesehen überlappt. Dabei wird der vordere Bereich des Türausschnitts üblicherweise von einer A-Säule gebildet, während der hintere Bereich üblicherweise von einer C-Säule gebildet wird. Beide Varianten haben gemeinsam, dass als erstes die vordere Seitentür geöffnet werden muss, um ein Ein- oder Aussteigen der Fahrzeuginsassen zu ermöglichen. Zum Öffnen der vorderen Seitentür vom Fahrzeuginnenraum aus weist die vordere Seitentür bei beiden Varianten auf der dem Fahrzeuginnenraum zugewandten Seite eine Betätigungseinrichtung zum Öffnen der vorderen Seitentür auf. Zusätlich ist im Fahrzeuginnenraum hinter der vorderen Seitentür eine zweite Betätigungseinrichtung angeordnet, mit der ebenfalls die geschlossene, vordere Seitentür geöffnet werden kann.

Beide Betätigungseinrichtungen öffnen bei Betätigung die vordere Seitentür. Als Öffnen der vorderen Seitentür im Sinne dieser Erfindung zählt auch bereits ein Entriegeln der vorderen Seitentür oder Öffnen der Drehfalle der vorderen Seitentür, die die Seitentür in der geschlossenen Stellung hält. Das tatsächliche Aufschwenken der Seitentür ist im Begriff Öffnen der vorderen Seitentür nicht notwendigerweise enthalten. Vorteilhafterweise öffnet die zweite Betätigungseinrichtung eine Drehfalle der vorderen Seitentür mechanisch und / oder elektrisch, die die vordere Seitentür in der geschlossenen Stellung hält.

Wenn der Türausschnitt mit einer vorderen Seitentür und einer hinteren Seitentür verschließbar ist, wobei die geschlossene, vordere Seitentür die geschlossene, hintere Seitentür überlappt, muss zunächst die vordere Seitentür zumindest einen Spalt weit geöffnet werden, bevor die hintere Seitentür geöffnet werden kann. Auch dieses nur geringfügige Aufschwenken der vorderen Seitentür fällt erfindungsgemäß unter den Begriff des Öffnens der vorderen Seitentür. Bevorzugt wird ein Türausschnitt, der mit einer solchen vorderen und hinteren Seitentür verschließbar ist, nicht durch eine Fahrzeugsäule, wie beispielsweise eine B-Säule, in zwei Teiltürausschnitte unterteilt.

Die erfindungsgemäße Anordnung erhöht vor allem den Komfort beim Aussteigen der Fahrzeuginsassen im Fond. Für die Passagiere auf den Vordersitzen des Kraftfahrzeugs ist normalerweise die erste Betätigungseinrichtung auf der Innenseite der vorderen Seitentür gut zugänglich. Die Fondpassagiere dagegen müssten sich schon sehr weit nach vorne lehnen oder gar nach vorne klettern, um die erste Betätigungseinrichtung nutzen zu können. Die zweite Betätigungseinrichtung hinter der vorderen Seitentür ist dagegen deutlich besser für die Fondpassagiere erreichbar. Bevorzugt ist die zweite Betätigungseinrichtung so im Fahrzeuginnenraum angeordnet ist, dass sie für Fahrzeuginsassen einer zweiten oder dritten Sitzreihe gut zugänglich ist. Auf diese Weise können auch die Fondpassagiere auf relativ bequeme Art die vordere Seitentür öffnen, sodass sie selbsttätig aussteigen können.

Günstigerweise ist die zweite Betätigungseinrichtung in einer Seitenverkleidung des Fahrzeuginnenraums hinter der vorderen Seitentür oder an einer Rückenlehne eines vorderen Fahrzeugsitzes angeordnet. Bereits heute sind Betätigungseinrichtungen für eine Easy-Entry-Funktion häufig seitliche an einer Rückenlehne eines Fahrzeugsitzes angeordnet. Dort ist eine entsprechende Betätigungseinrichtung einerseits für die hinter diesem Fahrzeugsitz sitzenden Fahrzeuginsassen gut zugänglich, andererseits sind versehentliche Fehlbedienungen praktisch ausgeschlossen.

Wenn ein Kraftfahrzeug beidseitig eine Türausschnittsöffnung aufweist, ist idealerweise sowohl für die linke als auch für die rechte vordere Seitentür jeweils eine zweite Betätigungseinrichtung hinter der jeweiligen vorderen Seitentür angeordnet. Dabei ist bevorzugt die zweite Betätigungseinrichtung für die linke vordere Seitentür in der linken Hälfte des Fahrzeuginnenraums und die zweite Betätigungseinrichtung für die rechte vordere Seitentür in der rechten Hälfte des Fahrzeuginnenraums angeordnet. Beispielsweise sind die zweiten Betätigungseinrichtungen jeweils an der der Fahrzeugaußenseite zugewandten Seite der Rückenlehne angeordnet. Auch die Seitenverkleidungen des Fahrzeuginnenraums hinter den vorderen Seitentüren sind gut für die Anbringung der zweiten Betätigungseinrichtungen geeignet. Dann ist beispielsweise die zweite Betätigungseinrichtung für die linke vordere Seitentür in der linken Seitenverkleidung angeordnet und die zweite Betätigungseinrichtung für die rechte vordere Seitentür in der rechten Seitenverkleidung.

Gemäß einer weiteren vorteilhaften Ausgestaltung ist die zweite Betätigungseinrichtung mit einer elektrischen Steuerung verbunden, sodass die vordere Seitentür bei Betätigung der zweiten Betätigungseinrichtung nur dann geöffnet wird, wenn zumindest ein definierter Zustand des Fahrzeugs vorliegt. Ein solcher definierter Zustand kann beispielsweise der Stillstand des Kraftfahrzeugs sein, sodass ein Öffnen der vorderen Seitentür mittels der zweiten Betätigungseinrichtung während der Fahrt nicht möglich ist. Dies stellt zugleich einen Missbrauchsschutz und eine Kindersicherung dar.

Bevorzugt wird bei Betätigung der zweiten Betätigungseinrichtung zugleich zumindest eine Entriegelungseinrichtung und / oder zumindest ein Verstellmechanismus eines vorderen Fahrzeugsitzes aktiviert. Das bloße Öffnen der vorderen Seitentür ermöglicht nicht automatisch bereits ein komfortables Aussteigen der Fondpassagiere. Oftmals ist der Ausstieg noch immer durch den vorderen Fahrzeugsitz verstellt. Dies kann dadurch umgangen werden, dass beim Betätigen der zweiten Betätigungseinrichtung nicht nur die vordere Seitentür geöffnet wird, sondern zugleich der vordere Fahrzeugsitz beispielsweise nach vorne fährt und die Rückenlehne nach vorne verschwenkt, wie es bei einer "easy entry" Funktionalität der Fall ist. Dabei sollte allerdings günstigerweise kein Passagier auf dem Vordersitz sitzen.

Bevorzugt wird dies durch die elektrische Steuerung berücksichtigt. So ist die Entriegelungseinrichtung und / oder der Verstellmechanismus des vorderen Fahrzeugsitzes nur aktiviert, wenn über eine Sitzbelegungserkennung sichergestellt ist, dass auf dem vorderen Fahrzeugsitz kein Fahrzeuginsasse sitzt. Alternativ kann sogar die gesamte zweite Betätigungseinrichtung deaktiviert sein, wenn der Vordersitz besetzt ist, da in diesem Fall auch das ausschließliche Öffnen der vorderen Seitentür keinen komfortablen Ausstieg ermöglicht.

Günstigerweise ist das Kraftfahrzeug ein Cabriolet oder Coupé. Cabriolets und Coupes sind typische Kraftfahrzeuge, bei denen die seitlichen Türausschnitte jeweils ausschließlich mit einer vorderen Seitentür verschlossen werden. Sie weisen aber meist dennoch eine hintere Sitzreihe auf. Die Fahrzeuginsassen auf dieser hinteren Sitzreihe können erfindungsgemäß jederzeit über eine zweite Betätigungseinrichtung eine vordere Seitentür öffnen und gegebenenfalls den Vordersitz aus dem Ausstiegsbereich heraus verlagern können, sodass sie komfortabel selbsttätig aussteigen können.

## Patentansprüche

1. Cabriolet oder Coupe mit einer seitlichen Türausschnittsöffnung, die ausschließlich mit einer vorderen Seitentür verschließbar ist, wobei die vordere Seitentür auf der dem Fahrzeuginnenraum zugewandten Seite eine Betätigungseinrichtung zum Öffnen der vorderen Seitentür aufweist, **dadurch gekennzeichnet, dass** im Fahrzeuginnenraum hinter der vorderen Seitentür eine zweite Betätigungseinrichtung angeordnet ist, bei deren Betätigung ebenfalls die geschlossene, vordere Seitentür geöffnet wird.

2. Cabriolet oder Coupe nach Anspruch 1, **dadurch gekennzeichnet, dass** die zweite Betätigungseinrichtung so im Fahrzeuginnenraum angeordnet ist, dass sie für Fahrzeuginsassen einer zweiten Sitzreihe zugänglich ist.

3. Cabriolet oder Coupé nach Anspruch 2, **dadurch gekennzeichnet, dass** die zweite Betätigungseinrichtung in einer Seitenverkleidung des Fahrzeuginnenraums hinter der vorderen Seitentür oder an einer Rückenlehne eines vorderen Fahrzeugsitzes angeordnet ist.

4. Cabriolet oder Coupé nach einem der vorhergehenden Ansprüche, **dadurch gekennzeichnet, dass** die zweite Betätigungseinrichtung mit einer elektrischen Steuerung verbunden ist, sodass die vordere Seitentür nur geöffnet wird, wenn zumindest ein definierter Zustand des Fahrzeugs vorliegt.

5. Cabriolet oder Coupe nach Anspruch 4, **dadurch gekennzeichnet, dass** die vordere Seitentür nur geöffnet wird, wenn als definierter Zustand das Fahrzeug nicht fährt.

6. Cabriolet oder Coupe nach einem der vorhergehenden Ansprüche, **dadurch gekennzeichnet, dass** die zweite Betätigungseinrichtung zum Öffnen der vorderen Seitentür mechanisch und / oder elektrisch eine Drehfalle öffnet, die die vordere Seitentür in der geschlossenen Stellung hält.

7. Cabriolet oder Coupe nach einem der vorhergehenden Ansprüche, **dadurch gekennzeichnet, dass** bei Betätigung der zweiten Betätigungseinrichtung zugleich zumindest eine Entriegelungseinrichtung und / oder zumindest ein Verstellmechanismus eines vorderen Fahrzeugsitzes aktiviert wird.

8. Cabriolet oder Coupe nach Anspruch 7, **dadurch gekennzeichnet, dass** die Entriegelungseinrichtung und / oder der Verstellmechanismus des vorderen Fahrzeugsitzes nur aktiviert wird, wenn über eine Sitzbelegungserkennung sichergestellt ist, dass auf dem vorderen Fahrzeugsitz kein Fahrzeuginsasse sitzt.

9. Cabriolet oder Coupe nach Anspruch 7 oder 8, **dadurch gekennzeichnet, dass** bei Betätigung der zweiten Betätigungseinrichtung der vordere Fahrzeugsitz sich nach vorne verlagert und / oder die Rückenlehne nach vorne verschwenkt wird.

## Claims

1. A convertible or coupé comprising a front side door opening closable exclusively by a front side door, wherein the front side door, on the side facing the vehicle interior, has an actuating device for opening the front side door, **characterised in that** a second actuating device is disposed in the vehicle behind the front side door and, when actuated, likewise opens the front side door when closed.

2. A convertible or coupé according to claim 1, **characterised in that** the second actuating device is so disposed in the interior of the vehicle as to be accessible for occupants of a second row of seats.

3. A convertible or coupé according to claim 2, **characterised in that** the second actuating device is disposed in lateral panelling on the interior of the vehicle, behind the front side door or on the back of a front seat.

4. A convertible or coupé according to any of the preceding claims, **characterised in that** the second actuating device is connected to an electric control system so that the front side door is opened only when the vehicle is in at least one defined state.

5. A convertible or coupé according to claim 4, **characterised in that** the front side door is opened only when the defined state is one in which the vehicle is stationary.

6. A convertible or coupé according to any of the preceding claims, **characterised in that** the second actuating device for opening the front side door mechanically or electrically opens a rotary latch which holds the front side door in the closed position.

7. A convertible or coupé according to any of the preceding claims, **characterised in that** when the second actuating device is actuated, at least one unlocking device and/or at least one mechanism for adjusting the front seat are simultaneously activated.

8. A convertible or coupé according to claim 7, **characterised in that** the unlocking device and/or the mechanism for adjusting the front seat are activated only when a seat occupation recognition device ensures that no one is sitting on the front seat.

9. A convertible or coupé according to claim 7 or claim 8, **characterised in that** when the second actuating device is actuated, the front seat is moved forwards and/or the back rest is swung forwards.

## Revendications

1. Cabriolet ou coupé comportant une découpe latérale de portière qui se ferme exclusivement avec une portière latérale avant,
- la portière latérale avant comportant sur son côté tourné vers l'intérieur de l'habitacle, une installation d'actionnement pour ouvrir la portière latérale avant,
**caractérisé par**
une seconde installation d'actionnement dans l'habitacle, derrière la portière latérale avant et dont la manoeuvre permet d'ouvrir également la portière latérale avant, fermée.

2. Cabriolet ou coupé selon la revendication 1,
**caractérisé en ce que**
la seconde installation d'actionnement est située dans l'habitacle du véhicule pour être accessible aux occupants du véhicule installés dans la deuxième rangée de sièges.

3. Cabriolet ou coupé selon la revendication 2,
**caractérisé en ce que**
la seconde installation d'actionnement est logée dans un habillage latéral de l'habitacle du véhicule, derrière la portière latérale avant ou au niveau du dossier d'un siège avant.

4. Cabriolet ou coupé selon l'une des revendications précédentes,
**caractérisé en ce que**
la seconde installation d'actionnement est reliée à une commande électrique de sorte que la portière avant ne peut s'ouvrir que pour au moins un état défini du véhicule.

5. Cabriolet ou coupé selon la revendication 4,
**caractérisé en ce que**
la portière avant ne peut être ouverte que si, comme état défini, le véhicule ne circule pas.

6. Cabriolet ou coupé selon l'une des revendications précédentes,
**caractérisé en ce que**
la seconde unité d'actionnement pour ouvrir la portière latérale avant ouvre mécaniquement et/ou électriquement un pêne tournant qui maintient la porte latérale avant en position fermée.

7. Cabriolet ou coupé selon l'une des revendications précédentes,
**caractérisé en ce que**
lors de son actionnement, la seconde unité d'actionnement, active simultanément une unité de déverrouillage et/ou au moins un mécanisme de réglage d'un siège avant.

8. Cabriolet ou coupé selon la revendication 7,
**caractérisé en ce que**
l'unité de déverrouillage et/ou le mécanisme de réglage du siège avant ne sont activés que si le dispositif de détection d'occupation de siège garantit qu'aucun passager ne se trouve sur le siège avant du véhicule.

9. Cabriolet ou coupé selon les revendications 7 ou 8,
**caractérisé en ce que**
l'actionnement de la seconde unité d'actionnement du siège avant du véhicule permet de faire coulisser le siège avant, vers l'avant ou de basculer le dossier vers l'avant.
